# EUROPÄISCHE PATENTSCHRIFT

(11) **EP 1 958 863 B1**
(45) Veröffentlichungstag und Bekanntmachung des Hinweises auf die Patenterteilung: **26.10.2011**
(21) Anmeldenummer: 08002614.9
(22) Anmeldetag: 13.02.2008
(51) Int. Cl.: B62K 23/04, B62M 25/04

(54) **Schalter für ein Fahrrad**
Switch for a bicycle
Commutateur pour un vélo

(30) Priorität: 15.02.2007 DE 102007008054
(43) Veröffentlichungstag der Anmeldung: 20.08.2008
(73) Patentinhaber: SRAM Deutschland GmbH, 97404 Schweinfurt (DE)
(72) Erfinder: Stürmer, Joachim, 97422 Schweinfurt (DE)

(56) Entgegenhaltungen:
- EP-A- 1 029 778
- EP-A- 1 820 724
- US-A1- 2002 189 524
- US-A1- 2004 001 022
- US-A1- 2005 172 752
- US-A1- 2007 245 846

## Beschreibung

Die Erfindung betrifft einen Schalter für die Anordnung vorzugsweise an einer Lenkstange eines Fahrrades, bestehend aus einem Gehäuse, einem Schaltring, einem Betätigungsring zum Einziehen und Loslassen eines Seilzuges und einem Befestigungsring sowie aus einer Anzeigeeinrichtung mit Ziffern und/oder Symbolen und einem Zeiger für die Kenntlichmachung der jeweiligen Gangstufe eines Schaltgetriebes zwischen den Pedalen und dem Hinterrad des Fahrrades.

Aus der FR 1538932A geht ein Drehgriffschalter mit einer Anzeigeeinrichtung hervor, bei welcher ein Zeiger sich über einer Skala mit Ziffern bewegt, wobei ein Gleitstein eine Nase aufweist und mit einem Seilzug verbunden ist und wobei die Nase in eine gewindeförmige Kurve am Drehgriff ragt. Durch die Betätigung des Drehgriffs verschiebt sich der in einem Gehäuse geführte Gleitstein axial und mit ihm der angefederte Seilzug. Der Gleitstein weist ferner einen nach radial außen weisenden Stift auf, der einen schwenkbaren Zeiger durch Entlanggleiten an seiner Kurvenbahn derart steuert, dass die Ziffern der Gangstufen entsprechend der Position des Seilzuges angefahren werden.

Ferner geht aus der EP 0552775 B1 eine Gangschaltvorrichtung hervor, die als Triggerschalter mit einer Schalttaste ausgeführt ist und zwei senkrecht zueinander stehende Achsen aufweist. Um die erste Achse drehen sich die Komponenten des Schaltapparates mit einem Getriebe und einer Seilrolle für den Seilzug. Die zweite Achse ist der Anzeigeeinrichtung zugeordnet, in der sich ein Zeiger mittels eines Zahnradgetriebes bewegt, dessen Spitze an einer Reihe von Ziffern entlang geführt wird, um die jeweilige Gangstufe anzuzeigen.

Die US 2005/0172752 zeigt einen gattungsgemäßen Drehgriffschalter für die Montage an einem Fahrradlenker, der eine mit einem Fenster ausgestattete Anzeigevorrichtung aufweist. Die Anzeigevorrichtung mit einem beweglichen Zeiger befindet sich seitlich vom Gehäuse des Schalters und ragt in Richtung der Achse des Lenkerbügels über das Gehäuse hinaus. Eine transparente Abdeckung ist über der Anzeigeeinrichtung angeordnet.

Aus der US 2002/0189524 ist ein Drehgriffschalter mit einer seitlich am Schaltergehäuse vorstehenden Anzeigeeinrichtung bekannt. Eine transparente Abdeckung überdeckt ein Fenster der Anzeigeeinrichtung, wodurch diese gegenüber äußeren Einflüssen geschützt wird.

Als Weiterentwicklung dieser teils teuren und teils aufwändigen Lösungen wird vorgeschlagen, einen kostengünstigen und leicht montierbaren Schalter zu schaffen, der eine Anzeigeeinrichtung aufweist, die mit einem modernen displayartigen Blickfenster übersichtliche Informationen liefert und diese Informationen mit farblichen Akzenten noch verstärken kann. So überdeckt das Blickfenster das Gehäuse ganz und erstreckt sich noch weiter entlang der Lenkstange über eine Ausbuchtung am Gehäuse und stützt sich am Gehäuse und an der Ausbuchtung ab. Es erlaubt neben dem Anzeigen der Gangpositionen auch die Anordnung von erklärenden Beschriftungen, wie zum Beispiel Name, Herkunft und Verwendungszweck des Schalters.

Das Blickfenster besteht vorzugsweise aus transparentem thermoplastischen Kunststoff mit kratz- und schlagfesten Eigenschaften. Weitere Eigenschaften sind ausreichende Elastizität und Festigkeit bei höheren Temperaturen, wie sie bei längerer Sonneneinstrahlung entstehen.

Um das Blickfenster noch unempfindlicher gegenüber Verkratzungen zu machen und zur Vermeidung von Beschädigungen, kann es mit einem Rahmen aus einem Kunststoffmaterial umgeben sein.

Der Schalter ist als Drehgriffschalter ausgeführt und weist einen Betätigungsring mit in axialer Richtung weisenden Vorsprüngen auf, die in einen Schaltring mit einer Feder eingreifen und diesen in beide Drehrichtungen mitnehmen. Dieser Schaltring wird vom Gehäuse umschlossen und nimmt einen Nippel eines Seilzuges auf, der mit dem Schaltgetriebe am Fahrrad verbunden ist und dem Wechsel der Gangstufen dient. Der Seilzug wird beim Einziehen im Schaltring aufgerollt und beim Freigeben wieder herausgezogen, da er am Schaltgetriebe angefedert ist und dadurch immer unter Spannung gehalten wird. Die speziell geformte Feder am Schaltring weist eine zahnförmige Anwinkelung auf, die mit rastenförmigen Haltenasen im Gehäuse derart zusammenwirkt, dass sich beim Wechsel von einer Gangstufe zur nächsten eine Verrastung ergibt, die erst durch Schalten in eine benachbarte Gangstufe gelöst werden kann.

Das Gehäuse weist eine Lagerstelle zur Aufnahme des Betätigungsringes auf, die aus elastischen Stegen mit je einem Bund besteht, die sich an das Rohr der Lenkstange anlegen und eine Demontage des Betätigungsringes im Einbauzustand des Schalters verhindern. Ferner weist das Gehäuse eine Seilführung mit einer Abdeckung auf, von wo aus der Seilzug zum Schaltgetriebe verläuft. In das Gehäuse ist ein Befestigungsring eingelassen, der eine Stellschraube aufweist, die zur Befestigung des Gehäuses und somit des Schalters an der Lenkstange dient.

Von der Lenkstange aus gesehen ist auf der der Seilführung mit der Abdeckung gegenüber liegenden Seite eine Ausbuchtung am Gehäuse angeordnet, die etwa die Breite des von außerhalb sichtbaren Gehäuses aufweist und mit einigem Abstand über der Lenkstange einen Raum bildet, in dem ein Zeiger der Drehbewegung des Schaltrings folgt, da dieser mit jener in formschlüssiger Weise zusammen gefügt ist. Der Raum mit dem Zeiger wird von einem Blickfenster abgedeckt, das aus transparentem thermoplastischen Kunststoff besteht und eine gekrümmte Form aufweist, die den Raum nach außen hin abschließt.

Das Blickfenster lässt sich vom Gehäuse ohne Zuhilfenahme von Werkzeugen lösen, da es an drei Stellen seines Umfangs Anformungen aufweist, die in solche am Gehäuse formschlüssig einrasten können. So ist am Blickfenster auf der zum Betätigungsring hin weisenden Seite mittig ein nach innen gerichteter Haltesteg angeordnet, der in eine entsprechende Vertiefung im Gehäuse einrastet. Zur Vervollständigung der Schnappverbindung sind an beiden Seiten des Blickfensters je eine Haltenase und eine Schräge angeordnet, die ebenfalls in entsprechende Anformungen im Gehäuse einrasten können. Gemeinsam ergeben der Haltesteg, die Haltenasen und die Schrägen eine Dreipunkt-Befestigung für das Blickfenster am Gehäuse, die als Schnappverbindung ausgebildet ist und den Vorteil hat, dass Kräfte, die von außerhalb auf das Blickfenster wirken, dieses nicht mehr vom Gehäuse lösen können. Die Entriegelung der Schnappverbindung kann nämlich nur durch eine Kraft erfolgen, die das Blickfenster anheben, also von der Lenkstange weg bewegen will.

Die eigentliche Anzeige der Gangstufen entsteht durch den Zeiger, der in dem Raum unter dem Blickfenster bewegt wird. Der Zeiger ist mit dem Schaltring und somit auch mit dem Betätigungsring formschlüssig verbunden und folgt der Drehbewegung beim Schalten der Gangstufen, wobei der Abstand zwischen dem Zeiger und dem Blickfenster klein gehalten ist. Es ist nämlich zwischen dem Inneren des Blickfensters und dem Zeiger eine Folie angeordnet, die nur an den Stellen der Ziffern und/oder Symbole für die Anzeige der Gangstufen transparent, sonst aber bedruckt ist, um Beschriftungen oder Typbezeichnungen in dekorativer Form anzubringen. Wenn sich der Zeiger beim Wechsel der Gangstufen unter die entsprechenden transparenten Ziffern und/oder Symbole schiebt, wird dieser teilweise sichtbar und vermittelt dem Fahrer eine optische Information, die besonders wirkungsvoll ausfällt, wenn der Zeiger eine auffällige Farbe aufweist. Die Anzeige könnte durch reflektierende Leuchtfarben am Zeiger für Dämmerlicht noch besser erkennbar gestaltet werden. Für Nachtfahrten könnte der Zeiger auch eine Beleuchtung aufweisen, die bei Bedarf zu installieren wäre.

Die aus durchsichtigem Kunststoffmaterial bestehende Folie wird aus einer etwa 0,2 mm starken Platine ausgestanzt, wodurch die Folie ausreichend stabil und elastisch wird, um ohne Hilfsmittel in dem Blickfenster montiert zu werden. Das vom Inneren des Raumes aus gesehene konkave Blickfenster weist nämlich nach innen weisende Randbegrenzungen auf, die die Folie umschließen und in welche die Folie bei ihrer Montage in das Blickfenster einschnappt. Die Folie nimmt so eine gekrümmte Lage ein, in der sie durch ihr Bestreben, ihre ursprüngliche planparallele Form anzunehmen, festgehalten wird. Der Zeiger wird in geringem Abstand an der Folie vorbei geführt und erscheint dem Fahrer nach jedem Wechsel der Gangstufe als farbige Ziffer.

Für besondere Belastungen des Schalters insbesondere bei Kinderrädern wird vorgeschlagen, das Blickfenster mit einem Schutzrahmen zu umgeben, der verhindert, dass das Blickfenster bei unsachgemäßer Behandlung Schaden nimmt. Dieser Schutzrahmen aus vorzugsweise gummielastischem Kunststoff wird spritzgießtechnisch in einer Form hergestellt, in die das Blickfenster eingelegt wird. Die hohe Temperatur des zu spritzenden Kunststoffes erzeugt eine Anschmelzung des thermoplastischen Materials und damit eine nicht mehr lösbare Verbindung zwischen dem Schutzrahmen und dem Blickfenster.

Die Erfindung hat es sich zur Aufgabe gemacht, einen Schalter zu schaffen, der kostengünstig herstellbar und mit möglichst wenigen Werkzeugen montierbar ist, wobei besonderer Wert auf eine übersichtliche und variable Anzeigeeinrichtung mit guter Ablesbarkeit gelegt wird.

Die Lösung der Aufgabe ist im kennzeichnenden Teil des Hauptanspruches 1 beschrieben. Ausgestaltungen sind den Unteransprüchen zu entnehmen.

Anhand mehrerer Zeichnungen wird ein Schalter für die Montage an einer Lenkstange eines Fahrrades erläutert. Es zeigen
- Fig.1: einen kompletten Schalter mit einem Gehäuse, einem Betätigungsring, einem Blickfenster und einem Zeiger in perspektivischer Darstellung;
- Fig.2: die Anordnung der Einzelteile des Schalters in Explosivdarstellung;
- Fig. 3: das Blickfenster mit einem Haltesteg, Haltenasen und Schrägen zur Darstellung einer Schnappverbindung in drei Ansichten;
- Fig. 4: einen Zusammenbau Blickfenster mit einem Schutzrahmen in zwei Ansichten.

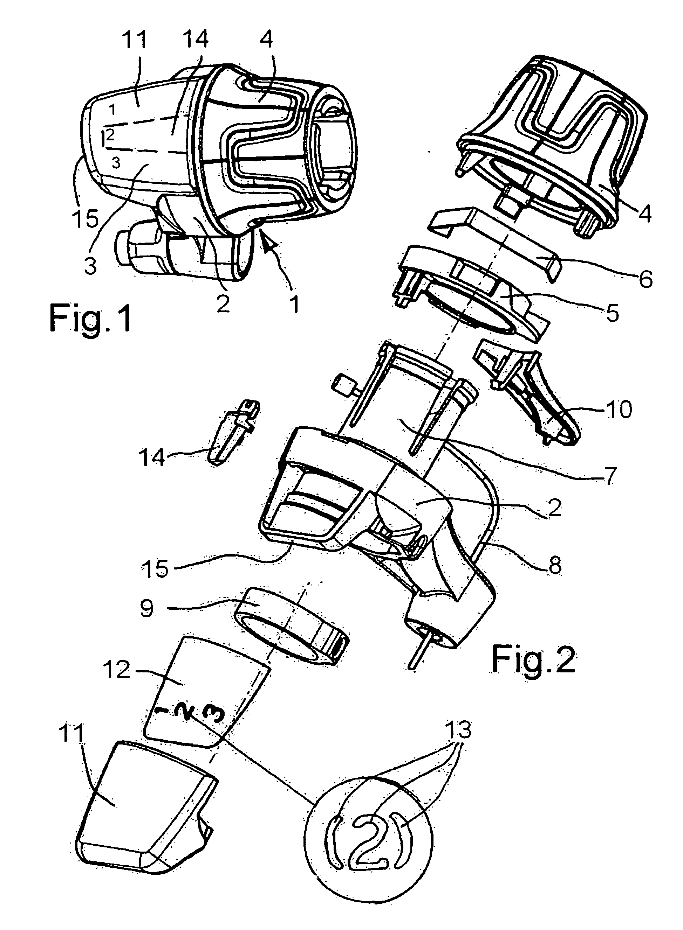

Gemäß Fig. 1 wird ein Schalter 1 vorgeschlagen, der als Drehgriffschalter ausgebildet ist und aus einem Gehäuse 2 mit einem Betätigungsring 4, einer Ausbuchtung 15, und einer Anzeigeeinrichtung 3 besteht. Die Anzeigeeinrichtung 3 umfasst im Wesentlichen ein Blickfenster 11 mit einem Zeiger 14, wobei das Blickfenster 11 die Ausbuchtung 15 sowie das Gehäuse 2 weitgehend überdeckt und ausreichend Fläche für den Betrachter bietet.

Einzelheiten sind der Fig. 2 zu entnehmen, wo alle Einzelteile des Schalters 1 in einer Explosivdarstellung aufgeführt sind. So ist ersichtlich, dass das Gehäuse 2 auf der Betätigungsseite eine Lagerstelle 7 aufweist, auf die der Betätigungsring 4 aufgeschoben wird, nicht ohne vorher einen Seilzug 8 einzufädeln und mit seinem Nippel in einem Schaltring 5 zu verankern, wobei am Schaltring 5 noch eine Feder 6 angeordnet wird und eine Abdeckung 10 den Seilzug 8 im Gehäuse 2 abschirmt. Am Gehäuse 2 ist auf der zur Fahrradmitte hin weisenden Seite eine Ausbuchtung 1 5 angeformt, die zur Lenkstange hin einen Boden aufweist, aber keinen Kontakt mit der Lenkstange hat. In dem so entstandenen Innenraum innerhalb der Ausbuchtung 15 bewegt sich der Zeiger 14, der mit dem Schaltring 5 formschlüssig verbunden ist.

Ein Befestigungsring 9 ist in das Gehäuse 2 eingelassen und wird über eine Stellschraube an der Lenkstange verspannt. Schließlich wird der Schalter 1 noch mit dem Blickfenster 1 und mit einer Folie 1 2 vervollständigt, wobei diese transparente Ziffern und/oder Symbole 13 aufweist, um den Zeiger 14 von außen sichtbar zu machen. Die Folie 12 schnappt an der Innenseite des Blickfensters 11 zwischen Randbegrenzungen 21 ein und schmiegt sich so an die konkave Krümmung der Innenseite des Blickfensters 11 an.

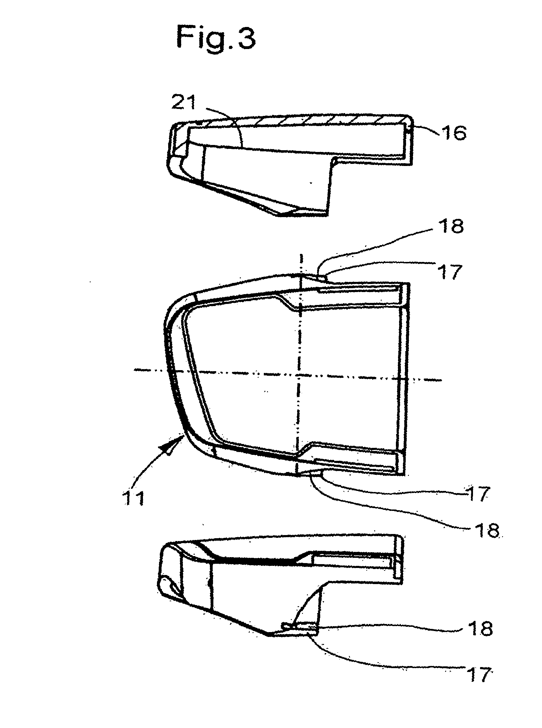

Aus Fig. 3 ist ersichtlich, wie das Blickfenster 11 mit dem Gehäuse 2 verbunden ist. Es handelt sich um eine Schnappverbindung, bestehend aus einem Haltesteg 16, der am Blickfenster 11 auf der zum Betätigungsring 4 hin weisenden Seite mittig nach innen gerichtet angeordnet ist und in eine entsprechende Vertiefung im Gehäuse 2 einrastet. Ferner sind an beiden Seiten des Blickfensters 11 je eine Haltenase 17 und eine Schräge 18 angebracht, die ebenfalls in entsprechende Anformungen im Gehäuse 2 einrasten.

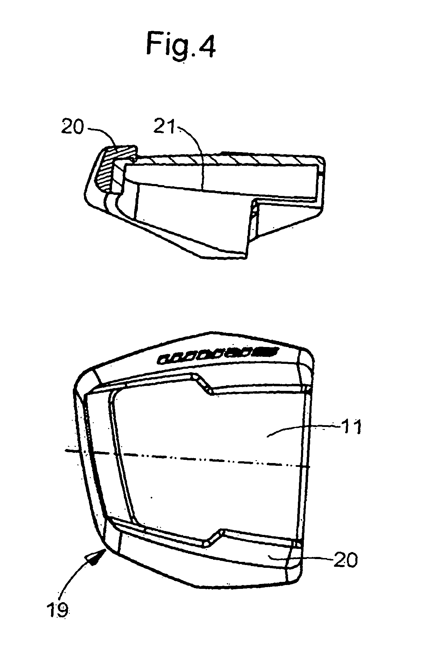

Aus der Fig. 4 geht schließlich ein Zusammenbau Blickfenster 19 hervor, der sich aus dem bekannten Blickfenster 11 und einem Schutzrahmen 20 zusammensetzt, wobei der Schutzrahmen 20 aus gummielastischem Kunststoff besteht und mit dem Blickfenster 11 unlösbar verbunden ist.

Von Vorteil ist die gute Übersichtlichkeit des Schalters 1 und die Möglichkeit, durch einfaches Austauschen der Folie 12 verschiedenartige Ziffern und/oder Symbole 13 sowie Beschriftungen anzubringen und so das Erscheinungsbild des Schalters 1 auf seine Umgebung zuzuschneiden.

### Bezugszeichenliste

- 1.: Schalter
- 2.: Gehäuse
- 3.: Anzeigeeinrichtung
- 4.: Betätigungsring
- 5.: Schaltring
- 6.: Feder
- 7.: Lagerstelle
- 8.: Seilzug
- 9.: Befestigungsring
- 10.: Abdeckung
- 11.: Blickfenster
- 12.: Folie
- 13.: Ziffern und/oder Symbole
- 14.: Zeiger
- 15.: Ausbuchtung
- 16.: Haltesteg
- 17.: Haltenase
- 18.: Schräge
- 19.: Zusammenbau Blickfenster
- 20.: Schutzrahmen
- 21.: Randbegrenzung

## Patentansprüche

1. Schalter für die Anordnung vorzugsweise an einer Lenkstange eines Fahrrades, bestehend aus einem Gehäuse, einem Schaltring, einem Betätigungsring zum Einziehen und Loslassen eines Seilzuges und einem Befestigungsring sowie aus einer Anzeigeeinrichtung mit Ziffern und/oder Symbolen für die Kenntlichmachung der jeweiligen Gangstufe eines Schaltgetriebes zwischen den Pedalen und dem Hinterrad des Fahrrades;
wobei das Gehäuse (2) entlang der Lenkstange eine Ausbuchtung (15) aufweist, die für die Anzeigeeinrichtung (3) einen ausreichend großen Raum bildet, in dem ein Zeiger (14) der Drehbewegung des Schaltrings (5) folgt und der von einem transparenten Blickfenster (11) abgedeckt und verschlossen wird;
wobei das Blickfenster (11) mit dem Gehäuse (2) über eine lösbare Schnappverbindung verbunden ist;
**dadurch gekennzeichnet,**
**dass** das Blickfenster (11) auf der zum Betätigungsring (4) hin weisenden Seite einen nach innen weisenden Haltesteg (16) aufweist, der zur Bildung des ersten Teils der Schnappverbindung in eine entsprechende Vertiefung im Gehäuse eingreift.

2. Schalter nach Anspruch 1,
**dadurch gekennzeichnet,**
**dass** das Blickfenster (11) an seinen Außenkanten von einem Schutzrahmen (20) aus vorzugsweise gummielastischem Kunststoff umgeben ist.

3. Schalter nach Anspruch 1 oder 2,
**dadurch gekennzeichnet,**
**dass** die Ausbuchtung (15) sich frei über die Lenkstange hin erstreckt.

4. Schalter nach Anspruch 1,
**dadurch gekennzeichnet,**
**dass** zur Bildung des zweiten Teils der Schnappverbindung an beiden Seiten des Blickfensters (11) je eine Haltenase (17) und je eine Schräge (18) angeordnet sind.

5. Schalter nach einem der Ansprüche 1 bis 4,
**dadurch gekennzeichnet,**
**dass** das Blickfenster (11) aus thermoplastischem Kunststoff besteht.

6. Schalter nach einem der Ansprüche 1 bis 5,
**dadurch gekennzeichnet,**
**dass** der Zeiger (14) farbig ausgeführt ist.

7. Schalter nach einem der Ansprüche 1 bis 6,
**dadurch gekennzeichnet,**
**dass** der Zeiger (14) formschlüssig mit dem Schaltring (5) verbunden ist.

8. Schalter nach einem der Ansprüche 1 bis 7,
**dadurch gekennzeichnet,**
**dass** das Blickfenster (11) mit einer Folie (12) unterlegt ist, die Ziffern und/oder Symbole (13) für die Anzeige der Gangstufen aufweist.

9. Schalter nach einem der Ansprüche 1 bis 8,
**dadurch gekennzeichnet,**
**dass** die Ziffern und/oder Symbole (13) transparent dargestellt sind, wohingegen die Restfläche der Folie (12) bedruckt ist und für erklärende Beschriftungen zur Verfügung steht.

10. Schalter nach einem der Ansprüche 1 bis 9,
**dadurch gekennzeichnet,**
**dass** das von innen her gesehen konkave Blickfenster (11) nach innen weisende Randbegrenzungen (21) aufweist, die die Folie (12) nach dem Einlegen an der konkaven Form festhalten.

11. Schalter nach Anspruch 2,
**dadurch gekennzeichnet,**
**dass** der Schutzrahmen (20) durch Spritzen des gummielastischen Kunststoffes in eine Form entsteht, wobei das Blickfenster (11) in diese Form eingelegt wird und eine nicht lösbare Verbindung mit dem Schutzrahmen (20) eingeht.

## Claims

1. Shifter for arranging preferably on a handlebar of a bicycle, consisting of a housing, a shift ring, an actuating ring for pulling in and releasing a cable pull, and a fastening ring, and also consisting of a display device having numbers and/or symbols for identifying the respective gear stage of a gear-shift mechanism between the pedals and the rear wheel of the bicycle;
wherein the housing (2) has a protrusion (15) along the handlebar, said protrusion (15) forming for the display device (3) a sufficiently large space, in which an indicator (14) follows the rotary movement of the shift ring (5) and which is covered and closed by a transparent viewing window (11);
wherein the viewing window (11) is connected to the housing (2) via a releasable snap-fit connection;
**characterized**
**in that** the viewing window (11) has, on the side directed towards the actuating ring (4), an inwardly directed retaining web (16), which engages into a corresponding depression in the housing in order to form the first part of the snap-fit connection.

2. Shifter according to Claim 1,
**characterized**
**in that** the viewing window (11) is surrounded at its outer edges by a protective frame (20) made preferably of elastomeric plastic.

3. Shifter according to Claim 1 or 2,
**characterized**
**in that** the protrusion (15) extends freely over the handlebar.

4. Shifter according to Claim 1,
**characterized**
**in that** in order to form the second part of the snap-fit connection a respective retaining nose (17) and a respective incline (18) are arranged on both sides of the viewing window (11).

5. Shifter according to one of Claims 1 to 4,
**characterized**
**in that** the viewing window (11) consists of thermoplastic.

6. Shifter according to one of Claims 1 to 5,
**characterized**
**in that** the indicator (14) is designed in a coloured manner.

7. Shifter according to one of Claims 1 to 6,
**characterized**
**in that** the indicator (14) is connected in a form-fitting manner to the shift ring (5).

8. Shifter according to one of Claims 1 to 7,
**characterized**
**in that** a film (12) which has numbers and/or symbols (13) for displaying the gear stages is placed under the viewing window (11).

9. Shifter according to one of Claims 1 to 8,
**characterized**
**in that** the numbers and/or symbols (13) are represented in a transparent manner, whereas the rest of the film (12) is printed and is available for explanatory labels.

10. Shifter according to one of Claims 1 to 9,
**characterized**
**in that** the viewing window (11), which is concave as seen from the inside, has inwardly directed boundaries (21) which fix the film (12) to the concave form after it has been inserted.

11. Shifter according to Claim 2,
**characterized**
**in that** the protective frame (20) is produced by injection-moulding the elastomeric plastic in a mould, with the viewing window (11) being inserted into this mould and entering into a non-reversible connection with the protective frame (20).

## Revendications

1. Commutateur pour l'agencement de préférence sur une barre de direction d'une bicyclette, constitué d'un boîtier, d'une bague de commutation, d'une bague d'actionnement pour tirer et relâcher un câble Bowden et d'une bague de fixation, ainsi que d'un dispositif d'affichage avec des chiffres et/ou des symboles pour indiquer le rapport de vitesse respectif d'un mécanisme de changement de vitesse entre les pédales et la roue arrière de la bicyclette ;
le boîtier (2) présentant, le long de la barre de direction, un renflement (15) qui forme un espace suffisamment grand pour le dispositif d'affichage (3), dans lequel un pointeau (14) suit le mouvement de rotation de la bague de commutation (5) et qui est recouvert et fermé par une fenêtre de vue transparente (11) ;
la fenêtre de vue (11) étant connectée au boîtier (2) par le biais d'une connexion par encliquetage desserrable ;
**caractérisé en ce que**
la fenêtre de vue (11) présente, du côté tourné vers la bague d'actionnement (4), une nervure de retenue (16) tournée vers l'intérieur, qui vient en prise dans un renfoncement correspondant dans le boîtier pour former la première partie de la connexion par encliquetage.

2. Commutateur selon la revendication 1,
**caractérisé en ce que**
la fenêtre de vue (11) est entourée sur ses bords extérieurs par un cadre de protection (20) en plastique de préférence ayant l'élasticité du caoutchouc.

3. Commutateur selon la revendication 1 ou 2,
**caractérisé en ce que**
le renflement (15) s'étend librement au-delà de la barre de direction.

4. Commutateur selon la revendication 1,
**caractérisé en ce que**
pour former la deuxième partie de la connexion par encliquetage, un nez de retenue (17) et un biseau (18) sont respectivement disposés sur les deux côtés de la fenêtre de vue (11).

5. Commutateur selon l'une quelconque des revendications 1 à 4,
**caractérisé en ce que**
la fenêtre de vue (11) se compose de plastique thermoplastique.

6. Commutateur selon l'une quelconque des revendications 1 à 5,
**caractérisé en ce que**
le pointeau (14) est réalisé de manière colorée.

7. Commutateur selon l'une quelconque des revendications 1 à 6,
**caractérisé en ce que**
le pointeau (14) est connecté par engagement par correspondance géométrique à la bague de commutation (5).

8. Commutateur selon l'une quelconque des revendications 1 à 7,
**caractérisé en ce que**
la fenêtre de vue (11) est pourvue en dessous d'elle d'une feuille (12) qui présente des chiffres et/ou des symboles (13) pour l'affichage des rapports de vitesse.

9. Commutateur selon l'une quelconque des revendications 1 à 8,
**caractérisé en ce que**
les chiffres et/ou les symboles (13) sont illustrés de manière transparente, tandis que le reste de la surface de la feuille (12) est imprimé et est disponible pour des inscriptions explicatives.

10. Commutateur selon l'une quelconque des revendications 1 à 9,
**caractérisé en ce que**
la fenêtre de vue (11), de forme concave vue depuis l'intérieur, présente des limitations des bords (21) tournées vers l'intérieur, qui fixent la feuille (12) après son application contre la forme concave.

11. Commutateur selon la revendication 2,
**caractérisé en ce que**
le cadre de protection (20) est obtenu par pulvérisation du plastique ayant l'élasticité du caoutchouc dans un moule, la fenêtre de vue (11) étant introduite dans ce moule et une liaison permanente étant réalisée avec le cadre de protection (20).
